# EUROPÄISCHE PATENTSCHRIFT

(11) **EP 2 317 347 B1**
(45) Veröffentlichungstag und Bekanntmachung des Hinweises auf die Patenterteilung: **17.01.2018**
(21) Anmeldenummer: 10010471.0
(22) Anmeldetag: 24.09.2010
(51) Int. Cl.: G01V 8/22

(54) **Optischer Sensor**
Optical sensor
Capteur optique

(30) Priorität: 27.10.2009 DE 102009050826
(43) Veröffentlichungstag der Anmeldung: 04.05.2011
(73) Patentinhaber: Leuze electronic GmbH + Co. KG, 73277 Owen/Teck (DE)
(72) Erfinder: Lohmann, Lutz, 82140 Olching (DE); Schauppel, Elmar, 86391 Stadtbergen (DE)
(74) Vertreter: Ruckh, Rainer Gerhard

(56) Entgegenhaltungen:
- EP-A2- 0 897 123
- WO-A2-2006/099317
- DE-A1- 3 213 625
- FR-A1- 2 929 783
- US-A1- 2009 073 533

## Beschreibung

Die Erfindung betrifft einen optischen Sensor gemäß dem Oberbegriff des Anspruchs 1.

Ein derartiger optischer Sensor bildet allgemein eine Lichtschranke oder eine Mehrfachanordnung von Lichtschranken, insbesondere einen Lichtvorhang, wobei der optische Sensor nach dem Reflexionsprinzip arbeitet. Die Objekterfassung erfolgt allgemein derart, dass durch eine Amplitudenbewertung der Empfangssignale des Empfängers oder der Empfänger registriert wird, ob der Lichtweg der Lichtstrahlen, bei freiem Überwachungsbereich, bei welchem die von dem oder einem Sender emittierten Lichtstrahlen den Überwachungsbereich ein erstes Mal passieren, dann am Reflektor reflektiert werden, den Überwachungsbereich ein zweites Mal passieren und dann auf den zugeordneten Empfänger treffen, unterbrochen ist. Durch eine Unterbrechung des Strahlengangs der Lichtstrahlen gelangt kein Licht oder eine im Vergleich zum freien Strahlengang sehr geringe Lichtmenge zum Empfänger, wodurch ein Objekteingriff im Überwachungsbereich detektiert werden kann.

Fehldetektionen können jedoch dann auftreten, wenn von einem in den Überwachungsbereich eindringenden Objekt die Lichtstrahlen gerichtet zum Empfänger reflektiert werden. Dann wird ein freier Überwachungsbereich vorgetäuscht, da die auf den wenigstens einen Empfänger auftreffende Lichtmenge jener des freien Überwachungsbereichs entspricht.

Derartige Fehldetektionen sind insbesondere dann besonders kritisch, wenn der optische Sensor ein Sicherheitssensor ist und zu Zwecken des Personenschutzes, beispielsweise zur Gefahrenbereichsüberwachung, eingesetzt wird.

Wird eine im Überwachungsbereich befindliche Person durch eine gerichtete Rückreflexion von Lichtstrahlen an einer stark reflektierenden Oberfläche zum Beispiel an der Kleidung der Person nicht erkannt, so besteht dadurch eine Gefahrensituation für diese Person.

Derartige Fehldetektionen müssen nach der Produktnorm für Sicherheitslichtschranken, der IEC 61496-2, vermieden werden, damit eine Lichtschranke im Bereich des Personenschutzes eingesetzt werden kann.

Bei bekannten Sicherheitslichtschranken werden diese Fehldetektionen dadurch vermieden, dass in deren Auswerteeinheit nicht nur eine Amplitudenbewertung der Empfangssignale des Empfängers durchgeführt wird. Vielmehr ist die Sicherheitslichtschanke zu einem Distanzsensor weitergebildet, mit dem der Abstand zwischen der Sende-/Empfangseinheit und dem Reflektor überwacht wird. Werden empfangsseitig Empfangssignale registriert, die von einem Objekt stammen, das näher liegt als die Sollposition des Reflektors, so wird dies als ein Objekteingriff im Überwachungsbereich gewertet.

Dadurch können die vorgenannten Fehldetektionen vermieden werden. Nachteilig hierbei ist jedoch, dass der konstruktive Aufwand zur Ausbildung der Distanzmessfunktion sehr hoch ist, so dass die Herstellkosten des optischen Sensors in unerwünschter Weise erhöht werden.

Die DE 32 13 625 A1 betrifft einen optischen Sensor mit einem Lichtstrahlen aussendenden Geber und einem Empfänger zur Aufnahme der durch einen Reflektor reflektierten, ausgesandten Lichtstrahlen. Der Reflektor ist ein die Lichtwellenlänge konvertierender Reflektor und der Empfänger ist auf die vom Reflektor konvertierter Wellenlänge abgestimmt. Vorzugsweise besteht der Reflektor aus fluoreszierendem Material. Hierdurch wird verhindert, dass zwischen Reflektor und der Kombination Geber/Empfänger eingebrachte Gegenstände als Reflektor wirken können.

Die EP 0 897 123 A2 betrifft eine Lichtschranke mit Sendeeinheiten zur Aussendung von Lichtsignalen in Richtung einer Umlenkeinheit und mit Empfangseinheiten zum Empfang von von der Umlenkeinheit umgelenktem Licht. Im Strahlengang zwischen den Sendeeinheiten und den Empfangseinheiten ist ein Überwachungsbereich ausgebildet. Die Lichtschranke umfasst Kodiervorrichtungen, durch welche dem ausgesandten Licht eine vorgegebene Bildinformation aufprägbar ist. Insbesondere benachbart zu den Empfangseinheiten sind in den Strahlengängen Dokodiervorrichtungen angeordnet, die im Wesentlichen die zu der dem ausgesandten Licht aufgeprägten Bildinformation korrespondierende Autokorrelationsfunktionen realisieren. Die Dekodiervorrichtungen sind als diffraktive optische Elemente ausgebildet.

In der WO 2006/099317 A2 sind retroreflektierende Markierungen, die insbesondere als Retroreflektoren ausgebildet sein können, beschrieben. Die Markierungen können Glaskugelschichten aufweisen, die mit fluoreszierenden Materialien versehen sein können.

Die FR 2 929 783 A1 betrifft einen als Reflexionslichtschranke ausgebildeten optischen Sensor, welche einen Sender, einen Empfänger sowie einen eine fluoreszierende Schicht aufweisenden Reflektor umfasst. Zur Störlichtunterdrückung emittiert der Sender modulierte Lichtstrahlen.

Die US 2009/0073533 A1 betrifft eine Sensoranordnung mit einer durchstimmbaren Lichtquelle, die Lichtsignale mit unterschiedlichen Wellenlängen generiert, die über einen optischen Strahlteiler auf unterschiedlichen Wegen zu einem Detektor geführt sind. Weiterhin ist ein Sicherheitslichtgitter beschrieben, bei welchem seitlich nacheinander einzelne Lichtsignale mit unterschiedlichen Wellenlängen erzeugt werden.

Der Erfindung liegt die Aufgabe zugrunde, einen optischen Sensor der eingangs genannten Art bereitzustellen, bei welchem mit geringem konstruktiven Aufwand Fehldetektionen sicher vermieden werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst eine an einem ersten Rand des Überwachungsbereichs angeordnete Sende-/Empfangseinheit. In einer Auswerteeinheit werden an dem Empfänger anstehende Empfangssignale zur Generierung eines Objektfeststellungssignals ausgewertet. Weiterhin umfasst der optische Sensor einen an einem zweiten Rand des Überwachungsbereichs angeordneten Reflektor. Die Sende-/Empfangseinheit weist mehrere Paare von Sendern und Empfängern auf, wobei bei freiem Überwachungsbereich die von einem Sender emittierten Lichtstrahlen über den Reflektor zum Empfänger des jeweiligen Paares zurück reflektiert werden. Die Sender emittieren Lichtstrahlen unterschiedlicher Wellenlängen und die Sender sind gleichzeitig aktiviert. Der Reflektor weist Reflektorbereiche mit unterschiedlichen Reflexionseigenschaften auf, wobei jedem Sender ein Reflektorbereich zugeordnet ist. Die Reflektorbereiche bestehen aus verschiedenen fluoreszierenden Materialien, die die Wellenlängen der auftreffenden Lichtstrahlen in unterschiedlicher Weise verändern. Jeder Empfänger ist auf die Wellenlänge der Lichtstrahlen des Senders des jeweiligen Paares, welche vom zugeordneten Reflektorbereich auf diesem auftreffen, abgestimmt.

Durch die Ausbildung des Reflektors mit einem fluoreszierenden Material können mit konstruktiv einfachen Mitteln Fehldetektionen des optischen Sensors sicher vermieden werden.

Dies beruht darauf, dass durch den Einsatz des erfindungsgemäßen Reflektors die von diesem bei freiem Überwachungsbereich zum Empfänger zurückreflektierten Lichtstrahlen von sämtlichen von Objekten zurückreflektierten Lichtstrahlen sicher unterschieden werden können. Durch das fluoreszierende Material wird die Wellenlänge der auftreffenden Lichtstrahlen des Senders in charakteristischer Weise geändert. Der zugeordnete Empfänger ist auf diese modifizierte Wellenlänge abgestimmt, das heißt er registriert vorzugsweise in einem engen Wellenlängenbereich nur Lichtstrahlen dieser Wellenlänge.

Da ein in den Überwachungsbereich eindringendes Objekt nicht aus dem fluoreszierenden Material des Reflektors besteht, wird die Wellenlänge der Lichtstrahlen, die vom Objekt rückreflektiert werden, nicht geändert. Daher weisen die vom Objekt rückreflektierten Lichtstrahlen die ursprüngliche Wellenlänge auf, wie sie vom Sender generiert wurde. Damit aber liegt die Wellenlänge der Lichtstrahlen nicht im Wellenlängenbereich des zugeordneten Empfängers, so dass im Empfänger diese Lichtstrahlen eindeutig von den vom Reflektor rückreflektierten Lichtstrahlen unterschieden werden können. Dies gilt insbesondere auch dann, wenn ein Objekt oder eine Person im Überwachungsbereich stark reflektierende Bereiche aufweist, von welchen die Lichtstrahlen gerichtet zum Empfänger reflektiert werden. Auch durch derartige gerichtete Rückreflektionen wird kein freier Überwachungsbereich vorgetäuscht.

Aufgrund dieser fehlersicheren Detektion verfüllt der optische Sensor die normativen Anforderungen der IEC 61496-2, so dass dieser insbesondere als Sicherheitssensor im Bereich des Personenschutzes eingesetzt werden kann. Zur Verfüllung weiterer normativer Anforderungen für den Einsatz des optischen Sensors als Sicherheitssensor weist dieser vorteilhaft eine redundante Auswerteeinheit auf.

Besonders vorteilhaft weist der Reflektor retroreflektierende Eigenschaften auf. Dadurch wird erreicht, dass die Lichtstrahlen in einem sehr engen Winkelbereich am Reflektor in Richtung des Empfängers reflektiert werden, so dass die Lichtstrahlen ohne große Energieverluste auf den jeweiligen Empfänger treffen.

Beispielsweise weist zur Ausbildung der retroreflektierenden Eigenschaften der Reflektor eine auf das fluoreszierende Material aufgebrachte Glaskugelschicht auf. Alternativ kann der Reflektor zur Ausbildung der retroreflektierenden Eigenschaften eine Miniaturhohlspiegelschicht aufweisen.

Dabei besteht der Reflektor aus starrem Material, wobei vorteilhaft das fluoreszierende Material in den Brennpunktbereichen der Miniaturhohlspiegel aufgebracht ist.

Erfindungsgemäß bildet der optische Sensor eine mehrstrahlige Lichtschrankenanordnung, insbesondere einen Lichtvorhang. Dessen Sende-/Empfangseinheit weist mehrere Paare von Sendern und Empfängern auf, wobei bei freiem Überwachungsbereich die von einem Sender emittierten Lichtstrahlen über den Reflektor zum Empfänger des jeweiligen Paares zurück reflektiert werden.

Bei einem derartigen mehrstrahligen optischen Sensor können prinzipiell die Sender gleichzeitig aktiviert sein, um Lichtstrahlen zu emittieren. Um eine gegenseitige Beeinflussung der einzelnen, von den Lichtstrahlen gebildeten Strahlachsen zu vermeiden, emittieren dann die Sender Lichtstrahlen mit unterschiedlichen Wellenlängen. Die Empfänger sind dann auf die Wellenlängen der zugeordneten Sender abgestimmt, wobei bei dieser Abstimmung die Wellenlängenveränderung der Lichtstrahlen durch deren Reflexion am fluoreszierenden Material des Reflektors berücksichtigt ist.

Bedingt durch die vorhandenen Öffnungswinkel der von den Sendern emittierten Lichtstrahlen kann es zu Überstrahlungen derart kommen, dass nach der Reflexion der Lichtstrahlen am Reflektor nicht das gesamte Sendelicht auf den zugeordneten Empfänger geführt wird, sondern ein kleiner Anteil auf einen benachbarten Empfänger trifft. Dies kann im ungünstigsten Fall zu Fehldetektionen führen.

Um derartige Fehldetektionen auszuschließen, weist der Reflektor Reflektorbereiche mit unterschiedlichen Reflexionseigenschaften auf, wobei jedem Sender ein Reflektorbereich zugeordnet ist.

Besonders vorteilhaft bestehen die Reflektorbereiche aus verschiedenen fluoreszierenden Materialen, die die Wellenlängen der auftreffenden Lichtstrahlen in unterschiedlicher Weise verändern.

Dabei ist jeder Empfänger auf die Wellenlänge der Lichtstrahlen des Senders des jeweiligen Paares, welche vom zugeordneten Reflektorbereich auf diesem auftreffen, abgestimmt.

Damit werden parasitäre Lichtanteile, die nach der Reflexion am Reflektor nicht auf den zugeordneten Empfänger, sondern auf einen benachbarten Empfänger treffen, in diesem unterdrückt, wodurch Fehldetektionen vermieden werden.

Generell kann zur Unterdrückung von Störlichteinstrahlungen in Form von Gleich- oder Fremdlicht eine Modulation der von den Sendern emittierten Lichtstrahlen vorgesehen sein.

Die Erfindung wird im Folgenden anhand der Zeichnungen erläutert. Es zeigen:
- Figur 1:: Ausführungsbeispiel eines optischen Sensors.
- Figur 2:: Ausführungsbeispiel des erfindungsgemäßen optischen Sensors.

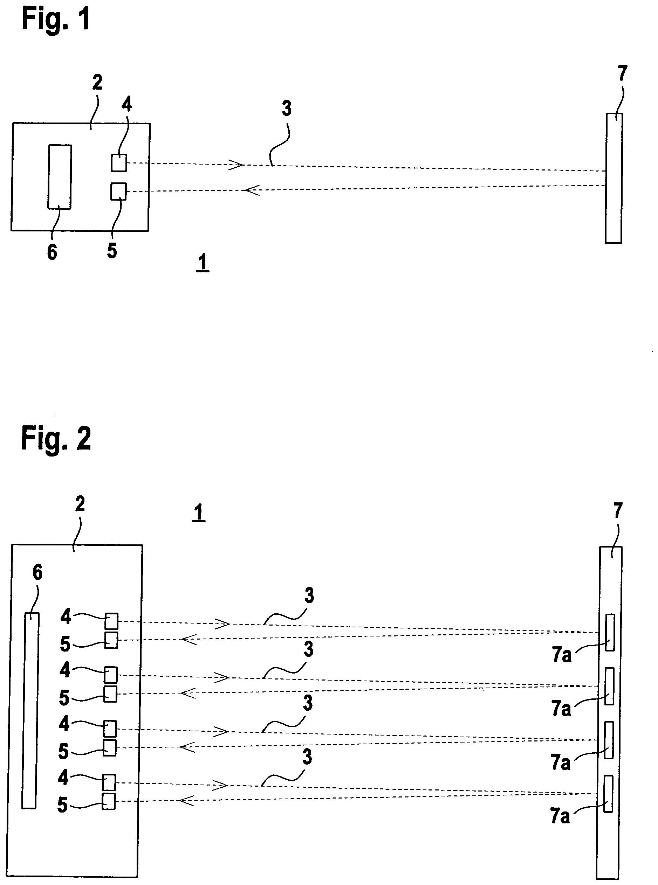

Figur 1 zeigt ein Ausführungsbeispiel eines optischen Sensors 1 zur Erfassung von Objekten in einem Überwachungsbereich. Der Begriff Objekt ist allgemein auszulegen und umfasst nicht nur Gegenstände aller Art, sondern insbesondere auch Personen. Der optische Sensor 1 ist im vorliegenden Fall als nach dem Reflexionsprinzip arbeitende Lichtschranke ausgebildet.

Der optische Sensor 1 weist ein Gehäuse 2 auf, in dem eine Sende-/Empfangseinheit integriert ist, welche im vorliegenden Fall von einem Lichtstrahlen 3 emittierenden Sender 4 und einem Lichtstrahlen 3 empfangenden Empfänger 5 gebildet ist. Der Sender 4 kann von einer Leuchtdiode, der Empfänger 5 von einer Photodiode gebildet sein. Im Gehäuse 2 des optischen Sensors 1 ist weiterhin eine Auswerteeinheit 6 integriert, die einerseits zur Ansteuerung des Senders dient. Andererseits erfolgt in der Auswerteeinheit 6 eine Auswertung der Empfangssignale des Empfängers 5 zur Generierung eines Objektfeststellungssignals. Im einfachsten Fall besteht die Auswerteeinheit 6 aus einem einzelnen Mikroprozessor oder dergleichen. Im vorliegenden Fall ist jedoch der optische Sensor als Sicherheitssensor ausgebildet, der im Bereich des Personenschutzes eingesetzt werden kann, beispielsweise zu einer Gefahrenbereichsabsicherung an einer Maschine oder Anlage. Hierzu ist die Auswerteeinheit 6 redundant aufgebaut, beispielsweise in Form zweier sich zyklisch überwachender Mikroprozessoren.

Der optische Sensor 1 weist weiterhin einen Reflektor 7 auf. Das Gehäuse 2 und der Reflektor 7 sind an gegenüberliegenden Rändern des Überwachungsbereichs so angeordnet, dass, wie in Figur 1 dargestellt, bei freiem Überwachungsbereich die vom Sender 4 emittierten Lichtstrahlen 3 durch den Überwachungsbereich geführt werden, dann am Reflektor 7 reflektiert werden und dadurch durch den Überwachungsbereich zum Empfänger 5 geführt werden.

Tritt ein Objekt in den Überwachungsbereich, wird der Strahlengang unterbrochen, was in der Auswerteeinheit 6 registriert wird. Dementsprechend wird in der Auswerteeinheit 6 als Objektfeststellungssignal ein binäres Schaltsignal generiert, dessen Schaltzustände angeben, ob sich ein Objekt im Überwachungsbereich befindet. Zur Generierung dieses Schaltsignals erfolgt in er Auswerteeinheit 6 eine Amplitudenbewertung, insbesondere eine Schwellwertbewertung des Empfangssignals.

Der Reflektor 7 besteht zumindest teilweise aus einem fluoreszierendem Material. Bei freiem Überwachungsbereich treffen die Lichtstrahlen 3 auf das fluoreszierende Material. Durch das fluoreszierende Material wird die Wellenlänge der Lichtstrahlen 3 geändert, das heißt die Wellenlänge der reflektierten Lichtstrahlen 3 ist gegenüber der Wellenlänge der einfallenden Lichtstrahlen 3 um eine für das fluoreszierende Material charakteristische Fluoreszenzwellenlänge verschoben.

Der Empfänger 5 ist auf die geänderte Wellenlänge der Lichtstrahlen 3 abgestimmt, das heißt mit dem Empfänger 5 werden selektiv Lichtstrahlen 3 dieser Wellenlänge erfasst.

Dadurch wird die Nachweissicherheit des optischen Sensors 1 erheblich erhöht, da die bei freiem Überwachungsbereich vom Reflektor 7 zurückreflektierten Lichtstrahlen 3 infolge der Wellenlängenänderung eindeutig von Lichtstrahlen 3, die von Objekten zurückreflektiert werden, unterschieden werden können. Dies gilt insbesondere auch für den Fall, dass ein Gegentand oder eine Person eintritt, welche stark reflektierende Oberflächen aufweist, von welchen die Lichtstrahlen 3 gerichtet zum Empfänger 5 reflektiert werden. Trotz der hohen auf dem Empfänger 5 auftreffenden Lichtmenge ist das Empfangssignal erheblich kleiner als bei freiem Überwachungsbereich, da die vom Gegenstand oder der Person rückreflektierten Lichtstrahlen 3 nicht in ihrer Wellenlänge verschoben sind, so dass diese Lichtstrahlen 3 außerhalb des Empfindlichkeitsbereichs des Empfängers liegen.

Der Reflektor 7 des optischen Sensors 1 kann prinzipiell aus starrem Material bestehen. Alternativ kann der Reflektor 7 aus biegsamem Material, insbesondere aus einer Folie, bestehen. Besonders vorteilhaft weist der Reflektor 7 retroreflektierende Eigenschaften auf. Zur Ausbildung der retroreflektierenden Eigenschaften kann auf das fluoreszierende Material des Reflektors 7 eine Glaskugelschicht aufgebracht werden. Alternativ kann der Reflektor 7 eine Miniaturhohlspiegelschicht aufweisen. Auf deren Vorderseite, insbesondere in den Brennpunktbereichen der Miniaturhohlspiegel, wird dann das fluoreszierende Material aufgebracht.

Figur 2 zeigt eine Ausführungsform des optischen Sensors 1. Dieser optische Sensor 1 bildet einen Lichtvorhang. Die Sende-/Empfangseinheit im Gehäuse 2 des optischen Sensors 1 umfasst vier Paare von Sendern 4 und Empfängern 5, die jeweils an die Auswerteeinheit 6 angeschlossen sind, welche für den Einsatz im Bereich der Sicherheitstechnik wieder einen redundanten Aufbau aufweist. Die von den Sendern 4 emittierten Lichtstrahlen 3 bilden vier in Abstand zueinander verlaufende Strahlachsen. Analog zum Ausführungsbeispiel gemäß Figur 1 weist auch der optische Sensor 1 gemäß Figur 1 einen Reflektor 7 mit fluoreszierendem Material auf, auf welchen die Lichtstrahlen 3 bei freiem Überwachungsbereich geführt sind. Die Empfänger 5 des optischen Sensors 1 sind auf die Wellenlängen der am fluoreszierenden Material reflektierten Lichtstrahlen 3 der zugeordneten Sender 4 abgestimmt. Trifft ein Objekt in den Überwachungsbereich und unterbricht wenigstens eine Strahlachse, erfolgt eine Objektmeldung, wobei hierzu in der Auswerteeinheit 6 ein Schaltsignal mit einem entsprechenden Schaltzustand generiert wird.

Die Sender 4 des optischen Sensors 1 werden gleichzeitig aktiviert. Um eine gegenseitige Beeinflussung der Strahlachsen auszuschließen, emittieren die Sender 4 Lichtstrahlen 3 mit unterschiedlichen Wellenlängen.

Bedingt durch die endlichen Öffnungswinkel der von den Sendern 4 emittierten Lichtstrahlen 3 können, insbesondere bei geringen Abständen benachbarter Sende-/Empfängerpaare, bei freiem Überwachungsbereich die vom Reflektor 7 zurückreflektierten Lichtstrahlen 3 einer Strahlachse nicht vollständig auf den Empfänger 5 dieser Strahlachse, sondern auch zu kleinen Teilen auf die benachbarten Empfänger 5 geführt werden. Dies kann zu unerwünschten Fehldetektionen führen.

Um dies zu vermeiden, weist der Reflektor 7 mehrere Reflektorbereiche 7a auf, wobei jeder Strahlachse ein Reflektorbereich 7a derart zugeordnet ist, dass die Lichtstrahlen 3 einer Strahlachse nur auf den zugeordneten Reflektorbereich 7a treffen. Die einzelnen Reflektorbereiche 7a bestehen aus unterschiedlichen fluoreszierenden Materialien mit unterschiedlichen Fluoreszenzwellenlängen. Damit werden die Wellenlängen der Lichtstrahlen 3 der einzelnen Strahlachsen bei der Reflexion an den unterschiedlichen Reflektorbereichen 7a in verschiedener Art geändert. Die Empfänger 5 der Strahlachsen sind auf die jeweils geänderte Wellenlänge der Lichtstrahlen 3 der jeweiligen Strahlachse abgestimmt, so dass jeder Empfänger 5 selektiv nur noch die Lichtstrahlen 3 des zugeordneten Senders 4 empfängt. Dadurch werden Störeffekte durch Überstrahlungen der Lichtstrahlen 3 auf benachbarte Empfänger 5 effizient beseitigt.

### Bezugszeichenliste

- (1): Optischer Sensor
- (2): Gehäuse
- (3): Lichtstrahlen
- (4): Sender
- (5): Empfänger
- (6): Auswerteeinheit
- (7): Reflektor
- (7a): Reflektorbereich

## Patentansprüche

1. Optischer Sensor zur Erfassung von Objekten in einem Überwachungsbereich, mit einer an einem ersten Rand des Überwachungsbereichs angeordneten Sende-/Empfangseinheit, mit einer Auswerteeinheit, in welcher an dem Empfänger anstehende Empfangssignale zur Generierung eines Objektfeststellungssignals ausgewertet werden, und mit einem an einem zweiten Rand des Überwachungsbereichs angeordneten Reflektor (7), wobei die Sende-/Empfangseinheit mehrere Paare von Sendern (4) und Empfängern (5) aufweist, wobei bei freiem Überwachungsbereich die von einem Sender (4) emittierten Lichtstrahlen (3) über den Reflektor (7) zum Empfänger (5) des jeweiligen Paares zurück reflektiert werden, **dadurch gekennzeichnet, dass** die Sender (4) Lichtstrahlen (3) unterschiedlicher Wellenlängen emittieren und die Sender (4) gleichzeitig aktiviert sind, und der Reflektor (7) Reflektorbereiche (13) mit unterschiedlichen Reflexionseigenschaften aufweist, wobei jedem Sender (4) ein Reflektorbereich (7a) zugeordnet ist, und dass die Reflektorbereiche (7a) aus verschiedenen fluoreszierenden Materialien bestehen, die die Wellenlängen der auftreffenden Lichtstrahlen (3) in unterschiedlicher Weise verändern, und dass jeder Empfänger (5) auf die Wellenlänge der Lichtstrahlen (3) des Senders (4) des jeweiligen Paares, welche vom zugeordneten Reflektorbereich (7a) auf diesem auftreffen, abgestimmt ist.

2. Optischer Sensor gemäß Anspruch 1, **dadurch gekennzeichnet, dass** der Reflektor (7) retroreflektierende Eigenschaften aufweist.

3. Optischer Sensor nach Anspruch 2, **dadurch gekennzeichnet, dass** zur Ausbildung der retroreflektierenden Eigenschaften der Reflektor (7) eine auf das fluoreszierende Material aufgebrachte Glaskugelschicht oder eine Miniaturhohlspiegelschicht, auf deren Vorderseite das fluoreszierende Material aufgebracht ist, aufweist.

4. Optischer Sensor nach Anspruch 3, **dadurch gekennzeichnet, dass** das fluoreszierende Material in den Brennpunktbereichen der Miniaturhohlspiegel aufgebracht ist.

5. Optischer Sensor nach einem der Ansprüche 1 bis 4, **dadurch gekennzeichnet, dass** der Reflektor (7) aus starrem Material oder biegsamem Material, insbesondere einer Folie, besteht.

6. Optischer Sensor nach einem der Ansprüche 1 bis 5, **dadurch gekennzeichnet, dass** die Lichtstrahlen (3) des oder der Sender (4) moduliert sind.

7. Optischer Sensor nach einem der Ansprüche 1 bis 6, **dadurch gekennzeichnet, dass** dieser ein Sicherheitssensor ist.

8. Optischer Sensor nach Anspruch 7, **dadurch gekennzeichnet, dass** dieser eine redundante Auswerteeinheit (6) aufweist.

## Claims

1. Optical sensor for detecting objects in a monitoring region, comprising a transmitting/receiving unit arranged at a first edge of the monitoring region, an evaluating unit in which the received signals present at the receiver are evaluated for generation of an object detection signal, and a reflector (7) arranged at a second edge of the monitoring region, wherein the transmitting/receiving unit comprises a plurality of pairs of transmitters (4) and receivers (5) and wherein, when the monitoring region is free, light beams (3) emitted by a transmitter (4) are reflected back by way of the reflector (7) to the receiver (5) of the respective pair, **characterised in that** the transmitters (4) emit light beams (3) of different wavelengths and the transmitters (4) are activated simultaneously and the reflector (7) has reflector regions (13) with different reflection characteristics, wherein a reflector region (7a) is associated with each transmitter (4), and that the reflector regions (7a) consist of different fluorescing materials which change the wavelengths of the incident light beams (3) in different ways, and that each receiver (5) is adapted to the wavelength of the light beams (3), which are incident on the receiver from the associated reflector region (7a), of the transmitter (4) of the respective pair.

2. Optical sensor according to claim 1, **characterised in that** the reflector (7) has retro-reflecting characteristics.

3. Optical sensor according to claim 2, **characterised in that** in order to form the retro-reflecting characteristics of the reflector (7) a glass sphere layer is applied to the fluorescing material or has a miniature cavity mirror layer on the front side of which the fluorescing material is applied.

4. Optical sensor according to claim 3, **characterised in that** the fluorescing material is applied in the focal point regions of the miniature cavity mirror.

5. Optical sensor according to any one of claims 1 to 4, **characterised in that** the reflector (7) consists of rigid material or flexible material, particularly a foil.

6. Optical sensor according to any one of claims 1 to 5, **characterised in that** the light beams (3) of the transmitter or transmitters (4) are modulated.

7. Optical sensor according to any one of claims 1 to 6, **characterised in that** this is a security sensor.

8. Optical sensor according to claim 7, **characterised in that** this has a redundant evaluating unit (6).

## Revendications

1. Capteur optique pour la détection d'objets dans une zone de surveillance, comprenant une unité d'émission/réception disposée à un premier bord de la zone de surveillance, une unité d'évaluation dans laquelle des signaux de réception présents au récepteur sont évalués pour générer un signal de détection d'objet, et un réflecteur (7) disposé à un deuxième bord de la zone de surveillance, l'unité d'émission/réception présentant plusieurs paires d'émetteurs (4) et de récepteurs (5), les rayons lumineux (3) émis par un émetteur (4) étant renvoyés par le réflecteur (7) vers le récepteur (5) de la paire respective lorsque la zone de surveillance est libre,
**caractérisé en ce que** les émetteurs (4) émettent des rayons lumineux (3) de longueurs d'onde différentes et les récepteurs (5) sont activés en même temps, et le réflecteur (7) présente des zones de réflecteur (13) ayant des propriétés réflexion différentes, une zone de réflecteur (7a) étant associée à chaque émetteur (4), et que les zones de réflecteur (7a) sont constituées de différents matériaux fluorescents qui modifient d'une manière différente les longueurs d'onde des rayons lumineux (3) incidents, et que chaque récepteur (5) est accordé sur la longueur d'onde des rayons lumineux (3) de l'émetteur (4) de la paire respective qui atteignent celui-ci à partir de la zone de réflecteur (7a) associée.

2. Capteur optique selon la revendication 1, **caractérisé en ce que** le réflecteur (7) présente des propriétés rétroréfléchissantes.

3. Capteur optique selon la revendication 2, **caractérisé en ce que** pour produire les propriétés rétroréfléchissantes, le réflecteur (7) présente une couche de billes de verre ou une couche de miroirs concaves miniatures sur la face avant de laquelle le matériau fluorescent est appliqué.

4. Capteur optique selon la revendication 3, **caractérisé en ce que** le matériau fluorescent est appliqué dans les zones focales des miroirs concaves miniatures.

5. Capteur optique selon l'une des revendications 1 à 4, **caractérisé en ce que** le réflecteur (7) est constitué d'un matériau rigide ou d'un matériau souple, en particulier d'une feuille.

6. Capteur optique selon l'une des revendications 1 à 5, **caractérisé en ce que** les rayons lumineux (3) du ou des émetteur(s) (4) sont modulés.

7. Capteur optique selon l'une des revendications 1 à 6, **caractérisé en ce que** celui-ci est un capteur de sécurité.

8. Capteur optique selon la revendication 7, **caractérisé en ce que** celui-ci présente une unité d'évaluation (6) redondante.
